# EUROPÄISCHE PATENTANMELDUNG

(11) **EP 1 349 024 A2**
(43) Veröffentlichungstag der Anmeldung: **01.10.2003**
(21) Anmeldenummer: 03003433.4
(22) Anmeldetag: 14.02.2003
(51) Int. Cl.: G05B 19/042

(54) **Kopplungsvorrichtung zum Ankoppeln von Geräten an ein Bussystem**

(30) Priorität: 18.03.2002 DE 10211939
(71) Anmelder: Sick AG, 79183 Waldkirch, Breisgau (DE)
(72) Erfinder: Dold, Franz Josef, 78120 Furtwangen (DE); Niehus, Jens, 79194 Gundelfingen (DE)
(74) Vertreter: Manitz, Finsterwald & Partner GbR

(57) **Zusammenfassung**

Es wird eine Kopplungsvorrichtung zum Ankoppeln von Geräten wie beispielsweise Sensoren, Aktoren oder Steuerungen an ein Bussystem beschrieben. Die Kommunikation zwischen den Geräten, d. h. das Senden und/oder Empfangen von Daten über das Bussystem, erfolgt dabei über ein erstes, beliebig vorgegebenes Kommunikationsprotokoll (Busprotokoll). Es ist zumindest eine geräteseitige Schnittstelle zum Anschließen eines Gerätes an die Kopplungsvorrichtung vorgesehen, wobei die geräteseitige Schnittstelle zur Kommunikation mit dem Gerät über ein zweites von dem Busprotokoll verschiedenes standardisiertes Kommunikationsprotokoll ausgebildet ist. Weiterhin ist zumindest eine busseitige Schnittstelle zum Anschließen der Kopplungsvorrichtung an das Bussystem vorgesehen, wobei die busseitige Schnittstelle zur Kommunikation mit dem Bussystem über das Busprotokoll ausgebildet ist. Die Kopplungsvorrichtung umfasst eine Protokollumsetzeinheit, durch die über die busseitige Schnittstelle empfangene Daten in das standardisierte Kommunikationsprotokoll und über die geräteseitige Schnittstelle empfangene Daten in das Busprotokoll umsetzbar sind.

## Beschreibung

Die vorliegende Erfindung betrifft eine Kopplungsvorrichtung zum Ankoppeln von Geräten wie beispielsweise Sensoren, Aktoren oder Steuerungen an ein Bussystem. Weiterhin ist die Erfindung auf ein elektronisches Überwachungssystem mit zumindest einem Gerät, das an einem Bussystem zum Senden und/oder Empfangen von Daten angeschlossen ist, gerichtet.

In vielen Anwendungen kommunizieren heutzutage unterschiedliche Geräte über ein Bussystem miteinander. Dabei ist eine Vielzahl von unterschiedlichen Bussystemen basierend auf unterschiedlichen Kommunikationsprotokollen bekannt. Auch im Bereich der elektronischen Überwachungssysteme nimmt die Verbreitung von so genannten Sicherheitsbussystemen, die teilweise auf Standard-Feldbusprotokollen basieren, zu. Um eine Kommunikation für eine Vielzahl von unterschiedlichen Busprotokollen zu ermöglichen, ist es für die Gerätehersteller zwingend, entsprechende Sicherheitsbusschnittstellen in die Geräte zu integrieren.

Aufgrund der Vielzahl der bekannten Sicherheitsbussysteme muss für ein flächendeckendes Angebot jedes Gerät, das beispielsweise ein Sensor, Aktor oder eine Steuerung sein kann, mit unterschiedlichsten Busschnittstellen ausgestattet werden. Je mehr Bussysteme existieren und abgedeckt werden müssen, umso höher sind die Entwicklungs- und Herstellungskosten entsprechender Geräte. Dies ist in vielen Fällen nicht mehr wirtschaftlich, so dass eine Reduzierung der Kosten bei der Entwicklung und Herstellung der Geräte gewünscht ist.

Da die Bussysteme nicht von den Geräteherstellern, sondern je nach Anwendungsfall von den Kunden vorgegeben werden, muss gewährleistet sein, dass die Geräte mit einer Vielzahl von unterschiedlichen Bussystemen zusammenarbeiten können.

Nachteilig an der Vielzahl von unterschiedlichen Sicherheitsbussystemen ist es auch, dass für eine Konfiguration und Diagnose der Geräte, die üblicherweise über das Bussystem erfolgt, jeweils eine eigene Bediensoftware mit entsprechenden Kommunikations- und Datenzugriffsprotokollen entwickelt werden muss, was zusätzlichen Aufwand erfordert.

Aufgabe der Erfindung ist es, eine kostengünstige Lösung anzugeben, mit der unterschiedliche Geräte, wie beispielsweise Sensoren, Aktoren und Steuerungen, an unterschiedlichste Bussysteme mit verschiedenen Busprotokollen anschließbar sind. Insbesondere soll dabei eine Ankopplung und Kommunikation über unterschiedliche Sicherheitsbussysteme in einfacher Weise möglich sein. Letztlich soll auch der Aufwand für die Konfiguration und Diagnose der einzelnen Geräte verringert werden.

Diese Aufgabe wird erfindungsgemäß durch eine Kopplungsvorrichtung der eingangs genannten Art gelöst, bei der die Kommunikation zwischen den Geräten, d. h. das Senden und/oder Empfangen von Daten über das Bussystem, über ein erstes, beliebig vorgegebenes Kommunikationsprotokoll (Busprotokoll) erfolgt, wobei diese Kopplungsvorrichtung folgende Elemente umfasst: zumindest eine geräteseitige Schnittstelle zum Anschließen eines Geräts an die Kopplungsvorrichtung, wobei die geräteseitige Schnittstelle zur Kommunikation mit dem Gerät über ein zweites, von dem Busprotokoll verschiedenes standardisiertes Kommunikationsprotokoll ausgebildet ist; zumindest eine busseitige Schnittstelle zum Anschließen der Kopplungsvorrichtung an das Bussystem, wobei die busseitige Schnittstelle zur Kommunikation mit dem Bussystem über das Busprotokoll ausgebildet ist; und zumindest eine Protokollumsetzeinheit, durch die über die busseitige Schnittstelle empfangene Daten in das standardisierte Kommunikationsprotokoll und über die geräteseitige Schnittstelle empfangene Daten in das Busprotokoll umsetzbar sind.

Mit der Erfindung wird somit eine Standardschnittstelle angegeben, durch die gewährleistet ist, dass eine Vielzahl von unterschiedlichen Geräten, welche alle über ein einheitliches, standardisiertes Kommunikationsprotokoll Daten austauschen können, mit einer Vielzahl von unterschiedlichen Bussystemen und damit verbundenen Busprotokollen zusammenarbeiten können. Es ist somit nicht mehr erforderlich, alle Geräte so aufwendig auszubilden, dass sie mit jedem unterschiedlichen Busprotokoll zusammenarbeiten können. Auf diese Weise kann der Entwicklungs- und Herstellungsaufwand der Geräte deutlich minimiert werden.

Die Kopplungsvorrichtung wandelt die von den Geräten mittels des Standardprotokolls übertragenen Daten in das jeweils verwendete Busprotokoll um, so dass die standardisierten Geräte mit beliebigen Bussystemen verwendbar sind.

Durch die standardisierte Geräteschnittstelle ist auch gewährleistet, dass die Konfiguration und Diagnose der Geräte über ein einheitliches Kommunikationsprotokoll und Datenzugriffsprotokoll durchgeführt werden kann.

Das standardisierte Kommunikationsprotokoll wird dabei so gewählt, dass es allen bekannten Busprotokollen sowie auch einer seriellen Schnittstelle leicht überlagert werden kann. Vorzugsweise eignen sich hierbei blockorientierte Datenübertragungsprotokolle. In diesem Falle ist es vorteilhaft, wenn auch in den Geräten eine entsprechende Datenhaltung nach Blockstruktur integriert ist. Grundsätzlich ist es jedoch auch möglich, objektorientierte Protokolle zu verwenden, welche die Datenhaltung mittels Objekten in den Geräten realisieren.

Um im Falle einer sicheren Kommunikation über ein Sicherheitsbussystem die für die Sicherheitstechnik erforderlichen Vorschriften einzuhalten, wird das standardisierte Kommunikationsprotokoll mit entsprechenden Sicherheitsmechanismen ausgestattet (Sicherheitslayer), um somit eine Zulassung nach einschlägigen Sicherheitsnormen zu erhalten. Grundsätzlich ist die Erfindung sowohl bei sicheren als auch bei unsicheren Bussystemen einsetzbar. Sind grundsätzliche Einzelheiten der Erfindung in dieser Anmeldung beispielhaft nur anhand einer sicheren/unsicheren Kommunikation beschrieben, so sind diese Einzelheiten auch bei einer unsicheren/sicheren Kommunikation anwendbar.

Nach einer vorteilhaften Ausführungform der Erfindung wird als Busprotokoll CAN, Profibus, Interbus, Ethernet, ASI, DeviceNet oder CANopen verwendet. Insbesondere beim Einsatz in der Sicherheitstechnik, ist das Busprotokoll als sicheres Kommunikationsprotokoll ausgebildet. Auch die Geräte sind in diesem Falle als Sicherheitsgeräte ausgebildet, wobei jedoch, wie bereits erwähnt, mit einer erfindungsgemäß ausgebildeten Kopplungsvorrichtung sowohl sichere als auch unsichere Geräte an das Bussystem anschließbar sind.

Nach einer weiteren bevorzugten Ausführungsform der Erfindung ist zumindest eine Steuereinheit zur Konfiguration und/oder Diagnose der Geräte vorgesehen. Vorteilhaft ist dabei die Steuereinheit über das Bussystem mit den Geräten verbunden, so dass sowohl die Konfiguration als auch die Diagnose der Geräte durch Datenübertragung über das Bussystem erfolgt. Grundsätzlich ist es jedoch auch möglich, dass die Steuereinheit direkt an die Kopplungsvorrichtung oder an die Geräte selbst zur Konfiguration und/oder Diagnose anschließbar ist.

Nach einer weiteren vorteilhaften Ausführungsform der Erfindung ist die Steuereinheit innerhalb der Kopplungsvorrichtung vorgesehen und über das Bussystem ansprechbar. Die Steuereinheit ist dabei üblicherweise als Softwaremodul innerhalb der Kopplungsvorrichtung ausgebildet, wodurch sich die Installation einer separaten Bediensoftware auf einem separaten Kunden-PC erübrigt. Insbesondere wenn die Steuereinheit über standardisierte Kommunikationsprotokolle ansprechbar ist und/oder mit den Geräten über standardisierte Kommunikationsprotokolle kommunizieren kann, ist es möglich, die Konfiguration und/oder die Diagnose der Geräte über ein Standardkommunikationsprogramm durchzuführen, das über das Bussystem mit der innerhalb der Kopplungsvorrichtung vorgesehenen Steuereinheit kommunizieren kann. So kann nach einer vorteilhaften Ausführungsform der Erfindung beispielsweise die Steuereinheit einen Web-Server umfassen und über das Bussystem durch einen standardisierten Web-Browser ansprechbar sein. Die Konfiguration und/oder Diagnose der Geräte kann somit in diesem Fall von einem Standard-PC aus erfolgen, der an dem Bussystem angeschlossen ist.

Grundsätzlich ist es auch möglich, dass die Steuereinheit als separate Einheit ausgebildet ist, die an das Bussystem anschließbar ist. Auch hier ist es möglich, dass die Steuereinheit entweder als Softwaremodul ausgebildet ist, das beispielsweise auf einem an dem Bussystem angeschlossenen Standard-PC installiert ist, oder dass die Steuereinheit als eigenständige Steuervorrichtung mit entsprechender Software ausgebildet ist. Auch hier kann die Steuereinheit selbst über standardisierte Kommunikationsprotokolle ansprechbar sein und/oder mit den Geräten über standardisierte Kommunikationsprotokolle kommunizieren. So kann auch in diesem Fall beispielsweise die Steuereinheit einen Web-Server umfassen, der im Gegensatz zur vorigen Ausführungsform nicht innerhalb der Kopplungsvorrichtung, sondern beispielsweise auf dem Kunden-PC läuft und über einen ebenfalls auf dem Kunden-PC installierten standardisierten Web-Browser ansprechbar ist. In diesem Falle werden die entsprechenden Konfigurations- und/oder Diagnosedaten über das Bussystem zu der Kopplungsvorrichtung und von dort anschließend zu dem jeweiligen Gerät weitergeleitet, während bei der zuvor genannten Ausführungsform lediglich die Steuerdaten für die Steuereinheit über das Bussystem übertragen werden, während die eigentlichen Konfigurations- und/oder Diagnosedaten jedoch unmittelbar von dem innerhalb der Kopplungsvorrichtung vorgesehenen Steuereinheit an das jeweilige Gerät weitergeleitet werden.

Nach einer weiteren vorteilhaften Ausführungsform der Erfindung ist das Busprotokoll des jeweils angeschlossenen Bussystems von der Kopplungsvorrichtung erkennbar und die Protokollumsetzeinheit entsprechend dem jeweils erkannten Busprotokoll automatisch einstellbar. Auf diese Weise ist gewährleistet, dass der Anwender nach Anschluss der Kopplungsvorrichtung an das Bussystem und entsprechendem Anschließen des Gerätes/der Geräte an die Kopplungsvorrichtung das gesamte System automatisch unmittelbar einsetzbar ist. Grundsätzlich ist es jedoch auch möglich, dass die Protokollumsetzeinheit manuell auf das Busprotokoll des jeweils angeschlossenen Bussystems einstellbar ist. Dies ist insbesondere dann sinnvoll, wenn aufgrund des verwendeten Busprotokolls eine automatische Erkennung nicht möglich ist.

Nach einer weiteren bevorzugten Ausführungsform der Erfindung ist ein an der Kopplungsvorrichtung angeschlossenes Gerät von der Kopplungsvorrichtung eindeutig identifizierbar. Dabei kann eine Identifizierung des Geräts durch die Kopplungsvorrichtung beispielsweise bei jedem Konfigurationsgriff und/oder bei jedem Betriebsstart des Gerätes und/oder der Kopplungsvorrichtung erfolgen. Durch eine solche Überwachung der Geräte durch die Kopplungsvorrichtung werden beispielsweise Änderungen der Anlagenkonfiguration erkannt, welche an eine entsprechenden Zentralsteuerung weitergeleitet werden können.

Weiterhin ist es nach einer bevorzugten Ausführungsform der Erfindung möglich, dass eine integrierte Datenverarbeitungseinheit vorgesehen ist, mit der die von einem Gerät oder von dem Bussystem gelieferten Daten nach vorgegebenen Regeln verarbeitbar sind. Auf diese Weise sind beispielsweise logische Verknüpfungen sowie eine Vorverarbeitung der Daten möglich.

Nach einer weiteren Ausführungsform der Erfindung ist genau eine geräteseitige Schnittstelle zum Anschließen eines Gerätes vorhanden. Vorteilhaft kann jedoch eine erfindungsgemäße Kopplungsvorrichtung mehrere geräteseitige Schnittstellen zum Anschließen mehrerer Geräte besitzen. Auf diese Weise können verschiedene Geräte mittels einer einzigen Kopplungsvorrichtung an dem Bussystem angeschlossen werden. Weiterhin ist es möglich, dass die Kopplungsvorrichtung lokale Feldsignale (Ein- sowie Ausgänge) auch zu den unterlagerten (Sicherheits-) Geräten weiterreichen und umgekehrt diese lokal ausgeben kann. Ebenso ist es möglich, dass sowohl sichere als auch nichtsichere Datensignale über die geräteseitige Schnittstelle und/oder die busseitige Schnittstelle einlesbar und/oder ausgebbar sind.

Auch bei der Verwendung des beschriebenen Web-Servers kann die Kommunikation über das standardisierte sichere Kommunikationsprotokoll mit den Sicherheitsgeräten erfolgen. Über den genannten Web-Browserkann dann die im Web-Server integrierte Bediensoftware aufgerufen und bedient werden.

Durch die Erfindung ist gewährleistet, dass unabhängig vom verwendeten Bussystem für die einzelnen Geräte immer der gleiche Datenzugriff gilt. Durch die Verwendung eines standardisierten (sicheren) Kommunikationsprotokolls und (sicheren) Datenzugriffsprotokolls, die den verschiedenen Feldbusprotokollen überlagert werden, ist gewährleistet, dass zwischen der Bediensoftware und den einzelnen Geräten immer die identische Kommunikationssprache besteht. Auch für die Steuereinheit werden die standardisierten Kommunikationsprotokolle verwendet, wobei mittels zertifizierter Softwarebausteine für Konfigurationsbackup und Download ebenfalls das erfindungsgemäße standardisierte Kommunikationsprotokoll verwendet wird.

Die Erfindung ist für jegliche Art von Geräten, wie Sensoren, Aktoren und Steuerungen, sicherer und unsicherer Art, die eine gemeinsame Kommunikationsschnittstelle besitzen, anwendbar. Diese Geräte können damit auch als Standardgeräte oder standardisierte Sicherheitsgeräte bezeichnet werden.

Durch die Erfindung werden die Entwicklungskosten für die Geräte reduziert, da mittels einer Kopplungsvorrichtung alle standardisierten (Sicherheits-) Geräte an das jeweilige (Sicherheits-) Bussystem anschließbar sind. Weiterhin ist ein transparenter Konfigurations-/Diagnosedatenzugriff über beliebig unterlagerte Kommunikationsprotokolle möglich.

Ein weiterer Vorteil der Erfindung liegt darin, dass eine einzige Bediensoftware über beliebige Sicherheitsprotokolle sowie Standardprotokolle mit den (Sicherheits-) Geräten kommunizieren kann. Es ist lediglich der Austausch der Kommunikationsdriver erforderlich.

Durch den Einsatz identischer Schnittstellen können Softwaremodule auch in weiteren Entwicklungen wieder verwendet werden. Auch von der Anwenderseite her ist die Kopplungsvorrichtung vorteilhaft, da das angeschlossene Gerät sich entsprechend der geforderten Gerätespezifikationen des jeweiligen Bussystems verhält, und darüber hinaus der Anwender die bereits gewohnten Bedienwerkzeuge des Geräteherstellers benutzen kann.

Weitere vorteilhafte Ausführungen der Erfindung sind in den Unteransprüchen angegeben.

Die Erfindung wird nachfolgend anhand von Ausführungsbeispielen unter Bezugnahme auf die Zeichnung näher erläutert; in dieser zeigen:
- Figur 1: ein Blockdiagramm zweier unterschiedlicher Ausführungsformen einer erfindungsgemäßen Kopplungsvorrichtung zum Anschluss von Geräten an ein Bussystem und
- Figur 2: ein Blockdiagramm einer weiteren Ausführungsform einer erfindungsgemäß ausgebildeten Kopplungsvorrichtung.

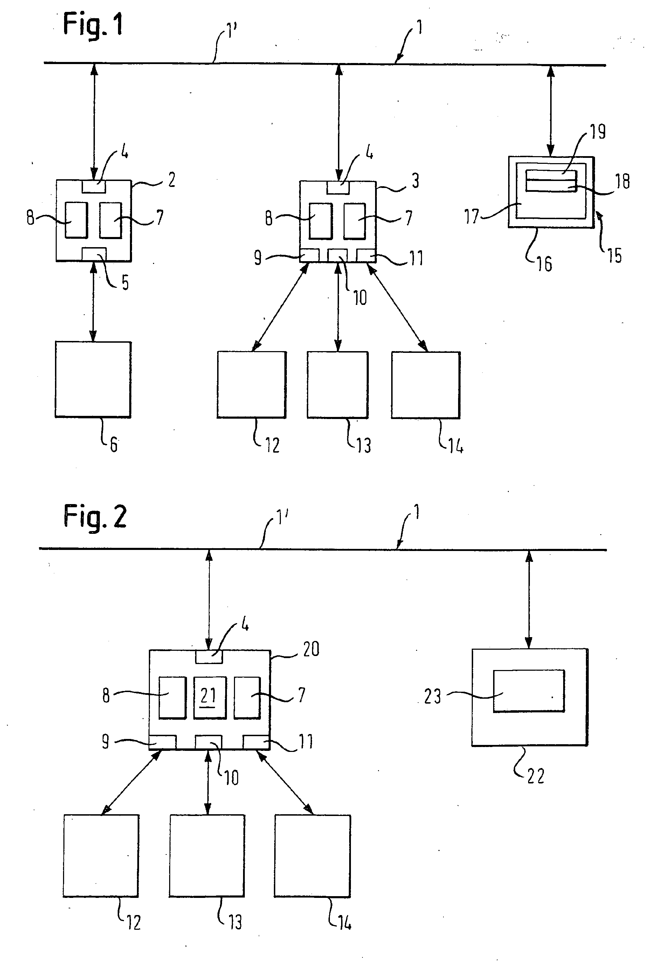

Figur 1 zeigt den Datenbus 1' eines Bussystems 1, an den zwei erfindungsgemäß ausgebildete Kopplungsvorrichtungen 2, 3 angeschlossen sind. Die Kopplungsvorrichtung 2 besitzt eine busseitige Schnittstelle 4 zum Anschließen der Kopplungsvorrichtung 2 an das Bussystem 1 sowie eine geräteseitige Schnittstelle 5 zum Anschließen eines Gerätes 6 an die Kopplungsvorrichtung 2. Bei dem Gerät 6 kann es sich dabei beispielsweise um einen Sensor, einen Aktor oder um eine Steuerung handeln.

Weiterhin umfasst die Kopplungsvorrichtung 2 eine Protokollumsetzeinheit 7, sowie eine integrierte Datenverarbeitungseinheit 8.

Die von dem Gerät 6, beispielsweise einem Sensor, erzeugten Datensignale werden über ein standardisiertes Kommunikationsprotokoll an die geräteseitige Schnittstelle 5 übertragen und anschließend innerhalb der Kopplungsvorrichtung 2 durch die Protokollumsetzeinheit 7 in das auf dem Bussystem 1 verwendete Busprotokoll umgesetzt. Vor, während oder nach dem Umsetzen kann dabei durch die Datenverarbeitungseinheit 8 eine Datenvorverarbeitung der von dem Gerät 6 gelieferten Daten erfolgen.

Die letztlich umgesetzten Daten werden von der busseitigen Schnittstelle 4 an das Bussystem 1 weitergegeben und über dieses an den Empfänger der Daten weitergeleitet.

Durch die Standardisierung des Kommunikationsprotokolls zwischen der geräteseitigen Schnittstelle 5 und dem Gerät 6 ist es möglich, das Gerät 6 durch beliebige andere standardisierte Geräte auszutauschen, ohne dass die Kommunikation über das Bussystem 1 beeinträchtigt wäre. Ebenso ist es möglich, das Gerät 6 mit einem anderen Bussystem, das mit einem anderen Busprotokoll betrieben wird, einzusetzen.

Die ebenfalls in Figur 1 gezeigte Kopplungsvorrichtung 3 unterscheidet sich von der Kopplungsvorrichtung 2 nur dadurch, dass anstelle einer geräteseitigen Schnittstelle 5 drei geräteseitige Schnittstellen 9, 10, 11 vorgesehen sind. Jede dieser geräteseitigen Schnittstellen 9, 10, 11 ist mit einem Gerät 12, 13, 14 verbunden, die jeweils über das standardisierte Kommunikationsprotokoll mit der Kopplungsvorrichtung 3 in Verbindung stehen.

Bei dieser Ausgestaltung der Kopplungsvorrichtung 3 ist es somit möglich, mehrere Geräte über eine einzige Kopplungsvorrichtung 3 mit dem Bussystem 1 zu verbinden. Auch hier ist dabei sowohl ein beliebiger Austausch der standardisierten Geräten 12, 13, 14 mit anderen standardisierten Geräten sowie ein Austausch des Bussystems 1 durch ein Bussystem mit einem anderen Busprotokoll möglich.

Figur 1 zeigt weiterhin eine Steuereinheit 15, die beispielsweise aus einem Personalcomputer 16 sowie einer auf diesem installierten Bediensoftware 17 bestehen kann. Über die Bediensoftware 17 kann der Anwender beispielsweise den Status der einzelnen Geräte 6, 12, 13, 14 zur Diagnose abfragen bzw. die Geräte konfigurieren. Die entsprechenden Datensignale werden dabei über eine Schnittstelle 18 in dem standardisierten Kommunikationsprotokoll erzeugt und anschließend über eine Umsetzeinheit 19 in das jeweilige auf dem Bussystem 1 verwendete Busprotokoll umgesetzt bzw. diesem überlagert. Auf diese Weise ist gewährleistet, dass auch die Steuereinheit 15 unabhängig von dem jeweils verwendeten Bussystem 1 mit dem zugehörigen Busprotokoll verwendbar ist.

Bei dem Ausführungsbeispiel gemäß Figur 2 sind bereits in Figur 1 beschriebene Elemente mit den gleichen Bezugszeichen wie in Figur 1 versehen.

Figur 2 zeigt eine erfindungsgemäße Kopplungsvorrichtung 20, in der neben den Schnittstellen 4, 9, 10, 11 und der Protokollumsetzeinheit 7 sowie der optionalen Datenverarbeitungseinheit 8 zusätzlich eine Steuereinheit 21 integriert ist. Die Steuereinheit 21 kann dabei beispielsweise einen Web-Server umfassen, der über die Schnittstellen 9, 10, 11 und das standardisierte Kommunikationsprotokoll mit den Geräten 12, 13, 14 kommunizieren kann. Insbesondere können somit Konfigurationsdaten von der Steuereinheit 21 an die Geräte 12, 13, 14 gesandt bzw. Diagnosedaten aus diesen ausgelesen werden.

Die Bedienung der Steuereinheit 21 erfolgt dabei über einen an dem Bussystem 1 angeschlossenen Standard-PC 22, auf dem beispielsweise ein standardisierter Web-Browser 23 installiert ist. Über den Web-Browser 23 kann beispielsweise eine innerhalb des Web-Servers der Steuereinheit 21 integrierte Bediensoftware aufgerufen und zur Steuerung der Geräte 12, 13, 14 bedient werden.

Bei dieser Ausführungsform ist somit für die Konfiguration und Diagnose der Geräte 12, 13, 14 weder eine spezialisierte Steuereinheit 21 noch die Installation einer Spezialsoftware auf einem als Steuereinheit dienenden Personalcomputer erforderlich, da zur Bedienung der integrierten Steuereinheit 21 lediglich ein Standard-PC an das Bussystem 1 angeschlossen wird.

### Bezugszeichenliste

- 1: Bussystem
- 1': Datenbus
- 2: Kopplungsvorrichtung
- 3: Kopplungsvorrichtung
- 4: busseitige Schnittstelle
- 5: geräteseitige Schnittstelle
- 6: Gerät
- 7: Protokollumsetzeinheit
- 8: Datenverarbeitungseinheit
- 9: geräteseitige Schnittstelle
- 10: geräteseitige Schnittstelle
- 11: geräteseitige Schnittstelle
- 12: Gerät
- 13: Gerät
- 14: Gerät
- 15: Steuereinheit
- 16: Personalcomputer
- 17: Bediensoftware
- 18: Schnittstelle
- 19: Umsetzeinheit
- 20: Kopplungsvorrichtung
- 21: Steuereinheit
- 22: Standard-PC
- 23: Web-Browser

## Patentansprüche

1. Kopplungsvorrichtung zum Ankoppeln von Geräten (6, 12, 13, 14) wie beispielsweise Sensoren, Aktoren oder Steuerungen an ein Bussystem (1), wobei die Kommunikation zwischen den Geräten (6, 12, 13, 14), d.h. das Senden und/oder Empfangen von Daten über das Bussystem (1), über ein erstes, beliebiges vorgegebenes Kommunikationsprotokoll (Busprotokoll) erfolgt,
- mit zumindest einer geräteseitigen Schnittstelle (5, 9, 10, 11) zum Anschließen eines Geräts (6, 12, 13, 14) an die Kopplungsvorrichtung (2, 3, 20), wobei die geräteseitige Schnittstelle (5, 9, 10, 11) zur Kommunikation mit dem Gerät (6, 12, 13, 14) über ein zweites, von dem Busprotokoll verschiedenes standardisiertes Kommunikationsprotokoll ausgebildet ist,
- mit zumindest einer busseitigen Schnittstelle (4) zum Anschließen der Kopplungsvorrichtung (2, 3, 20) an das Bussystem (1), wobei die busseitige Schnittstelle (4) zur Kommunikation mit dem Bussystem (1) über das Busprotokoll ausgebildet ist,
- und mit zumindest einer Protokollumsetzeinheit (7), durch die
· über die busseitige Schnittstelle (4) empfangene Daten in das standardisierte Kommunikationsprotokoll
· und über die geräteseitige Schnittstelle (5, 9, 10, 11) empfangene Daten in das Busprotokoll
umsetzbar sind.

2. Kopplungsvorrichtung nach Anspruch 1,
**dadurch gekennzeichnet,**
**dass** als Busprotokoll CAN, Profibus, Interbus, Ethernet, ASI, DeviceNet oder CANopen verwendet wird.

3. Kopplungsvorrichtung nach einem der vorhergehenden Ansprüche, dadurch **ekennzeichnet**,
dass das Busprotokoll als sicheres Kommunikationsprotokoll ausgebildet ist.

4. Kopplungsvorrichtung nach einem der vorhergehenden Ansprüche,
**dadurch gekennzeichnet,**
**dass** die Geräte (6, 12, 13, 14) als Sicherheitsgeräte ausgebildet sind.

5. Kopplungsvorrichtung nach einem der vorhergehenden Ansprüche,
**dadurch gekennzeichnet,**
**dass** zumindest eine Steuereinheit (15, 21) zur Konfiguration und/oder Diagnose der Geräte (6, 12, 13, 14) vorgesehen ist.

6. Kopplungsvorrichtung nach Anspruch 5,
**dadurch gekennzeichnet,**
**dass** die Steuereinheit (21) innerhalb der Kopplungsvorrichtung (20) vorgesehen ist und über das Bussystem (1) ansprechbar ist.

7. Kopplungsvorrichtung nach Anspruch 5,
**dadurch gekennzeichnet,**
**dass** die Steuereinheit (15) als separate Einheit ausgebildet ist, die an das Bussystem (1) anschließbar ist.

8. Kopplungsvorrichtung nach einem der Ansprüche 5 bis 7,
**dadurch gekennzeichnet,**
**dass** die Steuereinheit (15, 21) über standardisierte Kommunikationsprotokolle ansprechbar ist und/oder mit den Geräten (2, 12, 13, 14) über standardisierte Kommunikationsprotokolle kommunizieren kann.

9. Kopplungsvorrichtung nach einem der Ansprüche 5 bis 8,
**dadurch gekennzeichnet,**
**dass** die Steuereinheit (15, 21) einen Web-Server umfaßt und über das Bussystem (1) durch einen standardisierten Web-Browser (23) ansprechbar ist.

10. Kopplungsvorrichtung nach einem der Ansprüche 5 bis 9,
**dadurch gekennzeichnet,**
**dass** die Steuereinheit (21) als Softwaremodul ausgebildet ist.

11. Kopplungsvorrichtung nach einem der vorhergehenden Ansprüche,
**dadurch gekennzeichnet,**
**dass** das Busprotokoll des jeweils angeschlossenen Bussystems (1) von der Kopplungsvorrichtung (2, 3, 20) erkennbar und die Protokollumsetzeinheit (7) entsprechend dem jeweils erkannten Busprotokoll automatisch einstellbar ist.

12. Kopplungsvorrichtung nach einem der vorhergehenden Ansprüche,
**dadurch gekennzeichnet,**
**dass** die Protokollumsetzeinheit (7) manuell auf das Busprotokoll des jeweils angeschlossenen Bussystems (1) einstellbar ist.

13. Kopplungsvorrichtung nach einem der vorhergehenden Ansprüche,
**dadurch gekennzeichnet,**
**dass** ein an der Kopplungsvorrichtung (2, 3, 20) angeschlossenes Gerät (6, 12, 13, 14) von der Kopplungsvorrichtung (2, 3, 20) identifizierbar ist.

14. Kopplungsvorrichtung nach Anspruch 13,
**dadurch gekennzeichnet,**
**dass** eine Identifizierung des Geräts (6, 12, 1,3 14) durch die Kopplungsvorrichtung (2, 3, 20) bei jedem Konfigurationszugriff und/oder bei jedem Betriebsstart des Geräts (6, 12, 13, 14) und/oder der Kopplungsvorrichtung (2, 3, 20) erfolgt.

15. Kopplungsvorrichtung nach einem der vorhergehenden Ansprüche,
**dadurch gekennzeichnet,**
**dass** eine integrierte Datenverarbeitungseinheit (8) vorgesehen ist, mit der die von einem Gerät (6, 12, 13, 14) oder von dem Bussystem (1) gelieferten Daten nach vorgegebenen Regeln verarbeitbar, insbesondere miteinander logisch verknüpfbar sind.

16. Kopplungsvorrichtung nach einem der vorhergehenden Ansprüche,
**dadurch gekennzeichnet,**
**dass** genau eine geräteseitige Schnittstelle (5) zum Anschließen eines Geräts (6) vorhanden ist.

17. Kopplungsvorrichtung nach einem der Ansprüche 1 bis 15,
**dadurch gekennzeichnet,**
**dass** mehrere geräteseitige Schnittstellen (9, 10, 11) zum Anschließen mehrerer Geräte (12, 13, 14) vorhanden sind.

18. Kopplungsvorrichtung nach einem der vorhergehenden Ansprüche,
**dadurch gekennzeichnet,**
**dass** sowohl sichere als auch nichtsichere Datensignale über die geräteseitige Schnittstelle (5, 9, 10, 11) und/oder die busseitige Schnittstelle (4) einlesbar und/oder ausgebbar sind.

19. Elektronisches Überwachungssystem mit zumindest einem Gerät (6, 12, 13, 14) , das an einem Bussystem (1) zum Senden und/oder Empfangen von Daten angeschlossen ist,
**dadurch gekennzeichnet,**
**dass** das Gerät (6, 12, 13, 14) über eine Kopplungsvorrichtung (2, 3, 20) nach einem der vorhergehenden Ansprüche an das Bussystem (1) angeschlossen ist.
